# EUROPEAN PATENT APPLICATION

(11) **EP 3 340 143 A1**
(43) Date of publication of application: **27.06.2018**
(21) Application number: 16206450.5
(22) Date of filing: 22.12.2016
(51) Int. Cl.: G06Q 20/30, G06Q 20/22, G06Q 20/04

(54) **CONFIGURING A TRANSACTION DEVICE**

(71) Applicant: Mastercard International Incorporated, Purchase NY 10577 (US)
(72) Inventor: BERIC, John, London, NW11 8NH (GB); SINTON, James David, Leigh-On-Sea, Essex SS9 1JU (GB); ROBERTS, David Anthony, Warrington, WA4 5RD (GB)
(74) Representative: Richardson, Mark Jonathan

(57) **Abstract**

A method of configuring a transaction device (102, 160) for use within a closed loop transaction system (12), the closed loop transaction system comprising a point-of-interaction terminal (24) for processing transactions with the transaction device, the method comprising: receiving an instruction to set a field within a device data store on the transaction device to use a predetermined currency code specified by the terminal; receiving, at the transaction device, a transaction amount available for transactions with the closed loop terminal system; storing (202) the transaction amount on the transaction device; receiving an unique identifier associated with the closed loop terminal system for use in transactions with the point-of-interaction terminal within the system; storing (206) the unique identifier on the transaction device.

## Description

### Field of Invention

The present invention relates to electronic authentication systems, in particular those used for payment transactions.

### Background to the invention

Electronic authorisation systems for payment transactions use protocols such as those developed by EMVCo LLC which are published as specifications entitled "Integrated Circuit Card Specifications for Payment Systems". These specifications are for contact cards and are publically available and are currently at version 4.3 (currently available at http://www.emvco.com/specifications.aspx?id=223). An equivalent set of specifications for contactless devices, currently at version 2.6, has also been developed by EMVCo LLC and is also publicly available.

The specifications define a set of requirements to ensure interoperability between transaction devices, e.g. integrated circuit chip cards, and Points of Interaction (POIs), e.g. card terminals, on a global basis, regardless of the manufacturer, the financial institution, or where the card is used.

Processing of transactions occurring between a POI and a transaction device generally involves a series of transaction related communications being sent over a telecommunications network. In certain transaction environments it may be difficult to maintain consistent communications links with issuing banks and payment processing providers.

It is therefore an object of the present invention to provide a transaction device and associated transaction systems that provide a more consistent transaction environment.

### Statements of Invention

According to an aspect of the present invention there is provided a method of configuring a transaction device for use within a closed loop transaction system, the closed loop transaction system comprising a point-of-interaction terminal for processing transactions with the transaction device, the method comprising: receiving an instruction to set a field within a device data store on the transaction device to use a predetermined currency code specified by the terminal; receiving, at the transaction device, a transaction amount available for transactions with the closed loop terminal system; storing the transaction amount on the transaction device; receiving an unique identifier associated with the closed loop terminal system for use in transactions with the point-of-interaction terminal within the system; storing the unique identifier on the transaction device.

The present invention provides a transaction device that may be configured to be used in a closed loop environment, that is a transaction environment in which the point-of-interaction terminal is not in communication with a merchant or cardholder's bank. An example of a closed loop environment may be a music festival where on site point of sale devices do not have a communications link to the normal banking network.

The present invention comprises configuring the transaction device by setting a predetermined currency code for use within the closed loop environment. Such a predetermined currency code is chosen to be a code that would not normally be used by the transaction device or point-of-interaction terminal in normal open loop arrangements. A unique identifier may also be stored by the transaction device, the identifier uniquely identifying the closed loop environment. For example, a music festival may be allocated a first unique identifier and a trade fair may be allocated a second unique identifier that is different to that of the music festival. In such a way the use of a configured transaction device may be restricted to only work in certain closed loop environments.

The currency code may be a pseudo currency code. Storing the unique identifier may comprise updating a check data table on the transaction device (such that the transaction device can subsequently compare identifiers received from a point-of-interaction terminal during a transaction to determine whether it is being used in the correct closed-loop environment). The unique identifier may comprise an event identifier.

During configuration of the transaction device an upper cumulative transaction amount for use within the closed loop transaction system may be received and stored in a field within the data store. The upper cumulative transaction amount may be supplied via a dedicated configuration device that is associated with the closed loop environment.

Alternatively, the upper cumulative transaction amount may be set via the user of the transaction device prior to entering the closed loop environment.

According to a second aspect of the present invention there is provided a method of performing a closed loop transaction on a transaction device, comprising: configuring, in a configuration process, the transaction device according to the above first aspect of the present invention; initiating a transaction with a point-of-interaction terminal; receiving a communication from the point-of-interaction terminal; determining whether the received communication specifies a currency code and identifier that match the predetermined currency code and unique identifier stored on the transaction device during the configuration process and, in the event of a match, proceeding with the closed loop transaction.

In the second aspect of the present invention a transaction device that has been configured according to aspect of the present invention is used within a closed loop transaction. As part of initiating a transaction the transaction device sends a message to the point-of-interaction terminal requesting certain information required to process the transaction. As part of this message the transaction device may request the currency code of the terminal and may request any closed loop identifier to be sent back to the transaction device. Upon receipt of the terminal's currency code and closed loop identifier the transaction device compares this information with the predetermined currency code and unique identifier stored within the transaction device. In the event of a match the transaction device proceeds with the closed loop transaction.

In the event that the received communication specifies a currency code of the terminal and a closed loop identifier that do not match the predetermined currency code and unique identifier stored on the transaction device during the configuration process, the closed loop transaction may be terminated.

Initiating the transaction with the point-of-interaction terminal may comprise sending a card data object list to the terminal. The upper cumulative transaction amount stored within the data store may be updated when the transaction is processed.

The method may comprise receiving a transaction declined message from the terminal, the message comprising an instruction to retry the declined transaction. The declined transaction may then be continued and, in the event of completing the transaction, the cumulative transaction amount stored in the data store may be maintained.

An open loop transaction may be initiated in the event that the closed loop transaction is declined. An open loop transaction may also be initiated in the event that the upper cumulative transaction amount stored in the data store is less than the transaction amount of the transaction. Aspects of the present invention may therefore attempt to fall back to an open loop transaction in the event that the closed loop transaction fails.

According to a third aspect of the present invention there is provided a transaction device for use within a closed loop transaction system, the closed loop transaction system comprising a point-of-interaction terminal for processing transactions with the transaction device, the device comprising: an input arranged to receive: an instruction to set a field within a device data store on the transaction device to use a predetermined currency code specified by the terminal; a transaction amount available for transactions with the closed loop terminal system; and an unique identifier associated with the closed loop terminal system for use in transactions with the point-of-interaction terminal within the system; a processor arranged to store the transaction amount and the unique identifier on the transaction device wherein the processor is arranged to initiate a transaction with a point-of-interaction terminal and to determine, in response to a communication received from the point-of-interaction terminal at the input, and to determine whether the received communication specifies a currency code and identifier that match the predetermined currency code and unique identifier stored on the transaction device wherein, in the event of a match, the processor is arranged to proceed with the closed loop transaction.

The invention extends to a carrier medium for carrying a computer readable code for controlling a transaction device to carry out the method of the first and second aspects of the invention.

The invention extends to a non-transitory computer-readable storage medium storing executable computer program instructions implementing any of the first and second aspects of the invention.

In the above aspects of the present invention the transaction device may comprise a bank transaction card or a mobile communications device comprising a secure element. The point of interaction (POI) may comprise a point of sale terminal.

### Brief Description of Figures

Embodiments of the invention will now be described, by way of example, with reference to the accompanying Figures, of which:
Figure 1 shows a typical transaction involving a transaction device;
Figure 2 shows a closed loop transaction environment;
Figures 3(a) and 3(b) show a schematic of a transaction device in accordance with embodiments of the present invention;
Figure 4 shows a further transaction device in accordance with embodiments of the present invention;
Figures 5(a) and 5(b) show data flows between a transaction device and a point-of-interaction device;
Figures 6(a), 6(b) and 6(c) show the process of configuring a transaction card in accordance with embodiments of the present invention;
Figure 7 illustrates a torn transaction;
Figure 8 shows a transaction device and POI terminal interaction in accordance with embodiments of the present invention during a torn transaction;
Figure 9 shows a further embodiment of a closed loop transaction device in accordance with an embodiment of the present invention.

### Detailed Description

In the following description the transaction device is a payer device that may take many forms, e.g. a smartcard or another form factor like a mobile communications device, keyfob or wristband. The functional blocks that make up a transaction device may be distributed; so part, or all of, the device may be implemented in the cloud.

The Point of Interaction (POI) is a merchant device that may take many forms: dedicated merchant terminal device, mobile phone, internet server.

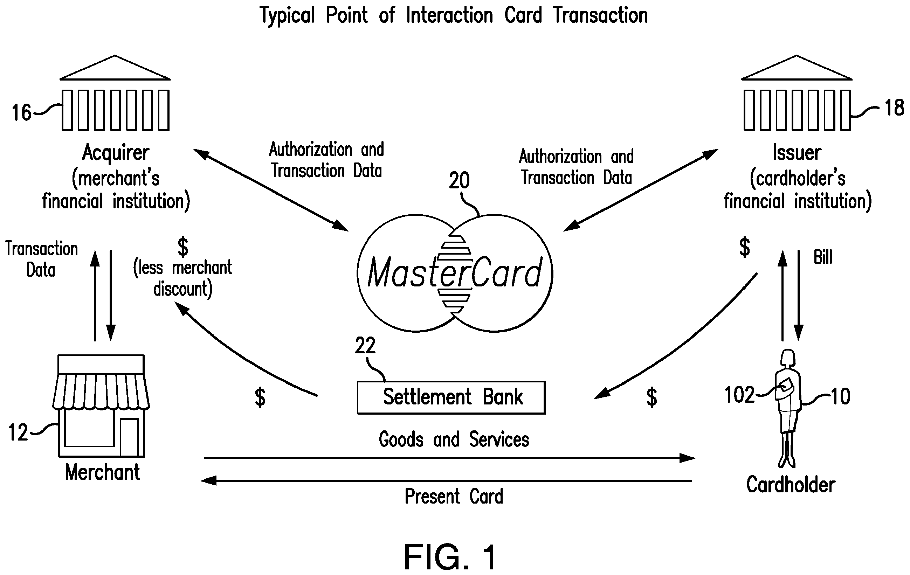

Atypical transaction involving a transaction device is shown in **Figure 1****.** A cardholder 10 enters a merchant 12 and presents their transaction device (card) 102 to the merchant to pay for good/services. The POI at the merchant (not shown) contacts the merchant's bank 16 and then authorises the transaction with the cardholder's bank 18 via the payment processing authority 20 (MasterCard). Subsequent to the transaction there will be a settlement 22 between the cardholder's bank and the merchant's bank.

The above transaction comprises a number of entities (merchant 12, merchant's bank 16, cardholder's bank 18) that are distributed from one another. Although not shown in the Figure it should be appreciated that these entities will be in communication with one another via one or more communications networks.

The arrangement shown in Figure 1 represents an "open-loop" system in which the POI at the merchant bank may contact and communicate the other entities in the system.

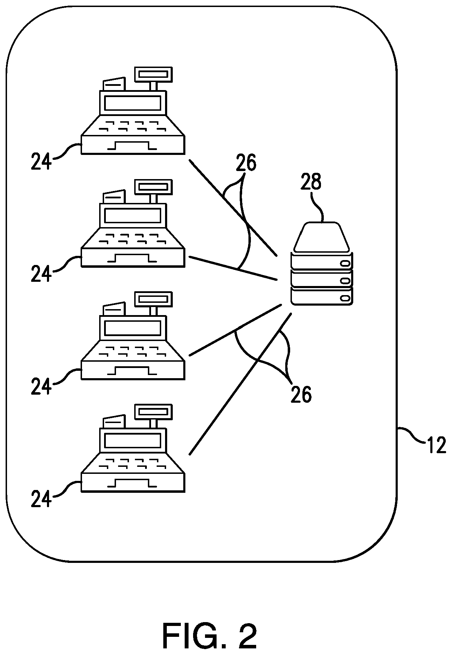

In an alternative arrangement, a pre-pay transaction card and POI may operate in an offline mode in which the transaction card interacts with the POI and associated payment processing computing devices only, i.e. there is no exchange of data across a communications network to the merchant/cardholder's banks. **Figure 2** shows such a "closed loop" system comprising a merchant 12 having a number of point of sale devices 24 which are connected via an internal communications network 26 to a transaction server 28. An example of a closed loop system may be a transportation network.

### Transaction Device Architecture

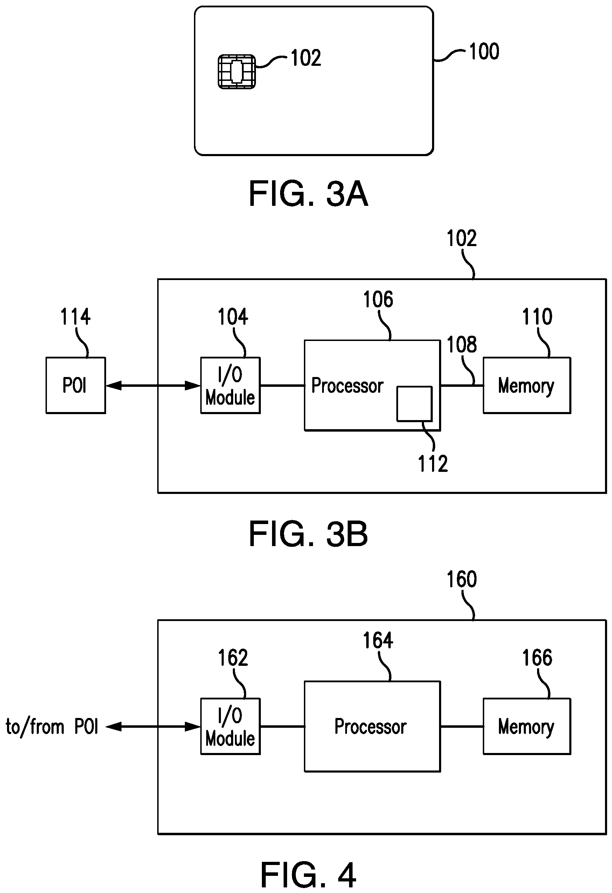

A schematic of a transaction device in accordance with embodiments of the present invention is shown in **Figures 3(a)** and 3**(b)**.

In **Figure 3(a)****,** a bank payment card 100 is shown, the card 100 comprising an integrated circuit element or transaction device 102. It is noted that although the transaction device 102 is shown embodied in a payment card 100 here and in the following description, the transaction device 102 may be embodied in alternative configurations, e.g. within a mobile telecommunications device or a SIM module within a mobile device or within a wearable device such as a wristband.

The transaction device 102 is shown in further detail in **Figure 3(b)** and is seen to comprise an input/output arrangement 104, a processor 106, a communications connection 108 to one or more memory devices 110 and a secure element 112.

The secure element 112 is a secure memory and execution environment in which application code and application data may be securely stored. The secure element 112 also provides an environment within which applications can be run and encryption, decryption and signature functions can be performed. The secure element 112 may be implemented by a separate secure circuit within the integrated circuit or in a mobile device environment may be embedded within a SIM card or a memory storage card that may be inserted into the mobile device. The secure element 112 may also be used to store financial or user data.

### Data exchange between POI and transaction device

Payment transactions comprise processes wherein data must be exchanged between a transaction device and a POI that are party to the payment transaction. **Figure 4** shows a further arrangement of a transaction device 160 according to embodiments of the present invention. The transaction device comprises an input/output (I/O) module 162 and a memory 166 each connected to a processor 164. The input/output module 162 is used to perform data communications with the POI 114.

During payment transactions, the POI 114 issues requests for data (i.e. commands) to the transaction device 160, e.g. during a card action analysis procedure the POI will issue a request that the transaction device generates a cryptogram. These commands are received by the input/output module 162 of the transaction device 160 and then communicated to the processor 164 for processing. The processor 164 obtains the data from the memory 166 to fulfil the command and responds to the POI 114 with the requested data. In this way, the POI 114 communicates with the transaction device 160 in a command driven approach.

For example, the payment transaction application selection process of ISO 7816, allows the POI to define a preferred order of payment applications (a transaction device may comprise a plurality of payment applications that exist inside the secure element 112, each of which may use different payment protocols. It is noted that only one payment application and its corresponding payment protocol is required to complete a payment transaction).

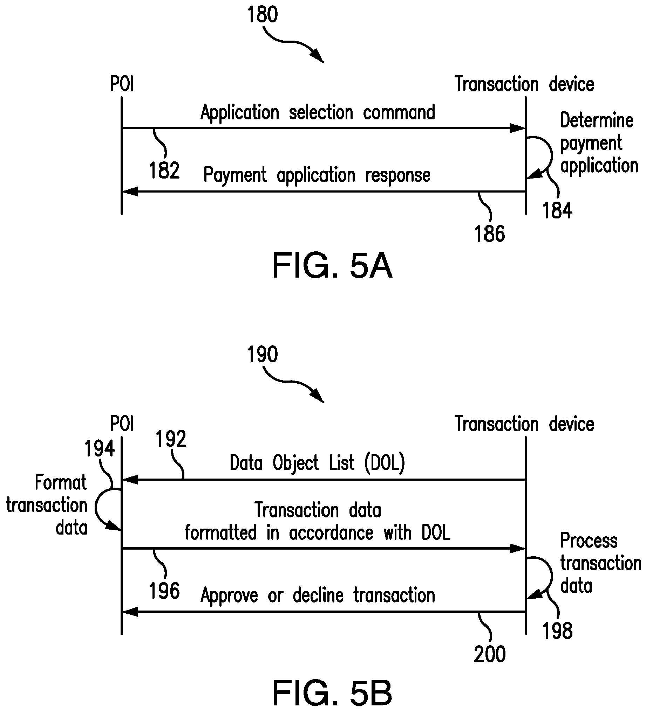

**Figure 5(a)** shows an example data flow 180 to determine which payment application will be used for a payment transaction. Once a channel is established between the POI 114 and the transaction device 160, the POI 114 can send at step 182 an application selection command to the transaction device 160. The application selection command comprises a command that the transaction device 160 returns which payment applications are available. The transaction device 160 determines at step 184 which payment applications are available and returns a list (which can be prioritised to show the transaction device preferences) at step 186 to the POI 114. The POI determines the payment application it has in common with the transaction device that is the most preferred by the transaction device.

Further, the transaction device 160 sends a Card Data Object List (CDOL) that is stored in the memory 166 to the POI 114 during a payment transaction, e.g. during the card action analysis described above the transaction card will send CDOL1. As illustrated in the data flow 190 of **Figure 5(b)****,** the transaction device 160 communicates at step 192 its CDOL to the POI 114. The CDOL is a fixed request issued by the transaction device 160 comprising instructions to the POI 114 with the syntax the transaction device requires for the transaction data. The transaction data that is formatted at step 194 in accordance with the CDOL is sent at step 196 from the POI 114 to the transaction device 160. The transaction data includes objects such as a payment amount, currency and an acquirer identity.

The transaction device 160 is configured to automatically process the formatted transaction data when it is received from the POI 114 without any explicit command to do so from the POI 114. The transaction data is parsed in a predetermined way by the processor 164 of the transaction device 160 to retrieve constituents of the transaction data. The transaction device 160 can then determine at step 198 whether to approve or decline a payment transaction based on whether the transaction data meets predetermined criteria. The decision of the transaction device 160 is returned at step 200 to the POI 114.

According to embodiments of the present invention a transaction card may be configured to behave in an open loop manner when it interacts with a POI terminal that supports open-loop transactions and may be configured to operate in a closed loop manner using a pseudo-currency.

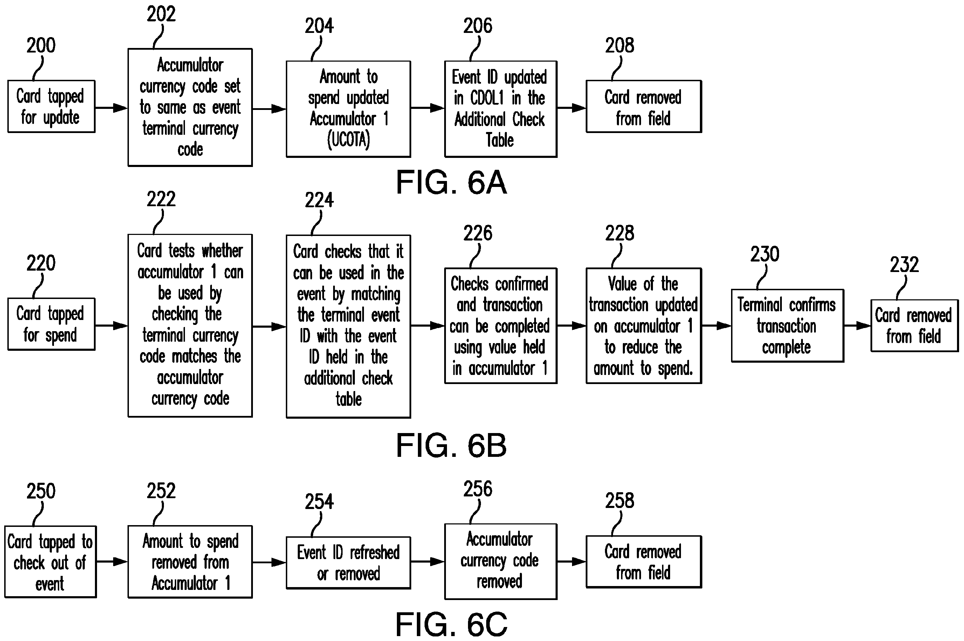

The process of configuring a transaction card in accordance with embodiments of the present invention and using such a configured card is shown in **Figures 6(a), 6(b)** and **6(c)****.**

**Figure 6(a)** shows a process of configuring a transaction card for use in an closed loop environment in accordance with embodiments of the present invention.

It is noted that the transaction card described with reference to Figure 6(a) below may be a bespoke transaction card for use in closed loop environments which can then be configured for use in an open loop manner. Alternatively, the transaction card may be a traditional payment device for use in an open loop environment which is reconfigured for use in the closed loop environment.

In step 200, the transaction device 100 interacts with a POI terminal device (e.g. by tapping the transaction device to the POI terminal 114 via a near field communication process).

The POI terminal device may be set to a "configuration" mode during this process for configuring open loop transaction devices for use in a closed loop system. The POI terminal device in this embodiment is a POI terminal device that is arranged to operate within a closed loop environment. The closed loop environment is associated with an identification reference, an "Event ID", for identifying the closed loop environment. The POI terminal devices within the closed loop environment are also arranged to process transactions within the closed loop environment using a pseudo currency code (it is noted that transaction devices may be capable of processing multiple currencies, each of which are identified by a currency code. The pseudo currency used in the closed loop environment may be identified by a currency code that would normally by unused within typical transaction devices).

In step 202, the POI terminal device 114 issues a script to the transaction device 100 to update the transaction device 100 to use the currency code associated with the closed loop environment (e.g. to use the pseudo currency code). It is noted that the issuer script sent to the transaction device in this step 202 has the effect of setting a currency code within a data store in the transaction device to the same currency code as the POI terminal device.

In step 204 a total transaction amount that may be spent in the closed loop environment is added to the transaction device. This step comprises setting an upper cumulative offline transaction amount (UCOTA) within a field (the "accumulator") in the data store of the transaction device. This field identifies the highest amount available to spend in an offline transaction.

In step 206 the Event ID relating to the closed loop environment that the transaction device is to be used in is updated on the card. This step comprises setting the required Event ID in an additional check table stored on the transaction device. This step will prevent the transaction device being used in an alternative closed loop transaction environment with a different Event ID.

In step 208 the transaction card is removed from the POI terminal device and is ready to be used in the closed loop environment.

**Figure 6(b)** shows the transaction device from Figure 6(a) being used in a transaction within the closed loop environment.

In step 220, the transaction device 100 is tapped at or inserted into a POI payment terminal 114 as part of a transaction.

In step 222, the transaction device 100 checks the data received from the POI terminal 114 in response to the CDOL communication to determine if the terminal currency code matches the currency code stored in the accumulator of the transaction device 100 (as set during step 202).

In step 224, the transaction device 100 checks the Event ID returned from the POI terminal 114 to see if it matches the Event ID stored in the additional check table in step 206.

[It is noted that the Card Data Object List that is sent by the transaction device to the terminal in Figure 6(b) is a fixed set of tags. This set of tags tells the terminal how to construct a data message that it needs to send to the transaction device during a transaction.

The CDOL sent by the transaction device is a specific DOL that is used in generating a transaction cryptogram and contains the tag for the Event ID in question. In its reply to the transaction device, the terminal includes the Event ID in a specific place within the data message that it sends.

The transaction device can then check the Event ID contained in the transaction device's data message against the value held in its additional check table]

If the checks performed in steps 222 and 224 are met then the transaction may be completed, in step 226, using the value (UCOTA) held in the accumulator. In step 228, the value of the transaction is updated from the UCOTA value held in the accumulator. In step 230, the POI terminal 114 confirms that the transaction is complete and in step 232 the transaction device is removed from the POI terminal 114.

**Figure 6(c)** shows the process of switching the transaction device 100 from figures 6(a) and 6(b) back to open loop operation.

In step 250 the transaction device 100 is brought to a POI terminal 114 with an instruction to check out of the event.

In step 252 the amount to spend left on the card is removed from the accumulator. In step 254 the Event ID is either removed or refreshed and in step 256 the currency code in the accumulator is removed. The card is then removed from the POI terminal in step 258 and is ready to be used in its normal manner, e.g. the card may be used following step 258 as a traditional payment card in an open-loop environment. It is noted that the POI terminal 114 will update a host server within the payment environment of Figure 1 with details of the amount removed from the transaction device 100 in step 252 such that an appropriate amount may be credited back into the user's account.

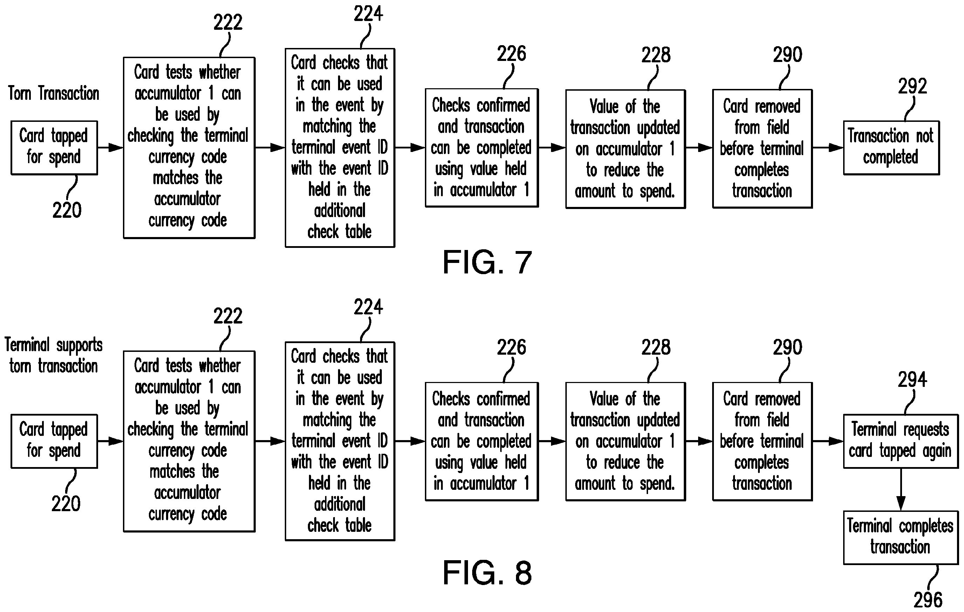

**Figure 7** illustrates, in an example useful for understanding the present invention, the transaction process where a known transaction card is removed from the POI terminal before the transaction is complete resulting in a "torn" transaction.

A POI terminal 114 used in the transaction process of Figure 6(b) should support torn transactions to ensure that transactions are completed and the transaction value is removed from the accumulator *value to spend* entry even if a transaction device is removed prematurely from the POI terminal 114.

In Figure 7, process steps 220, 222, 224, 226 and 228 are the same as for the transaction process described in relation to Figure 6(b) and will not be described again here. In step 290 of Figure 7 however the transaction device 100 is removed prematurely from the POI terminal 114 such that the transaction completion step (see step 230 of Figure 6(b)) does not occur and the transaction is marked as not completed in step 292.

Figure 7 shows a transaction environment in which torn transactions are not supported. It is noted that in such cases then there is a risk that the value of the transaction is removed from the *amount to spend* on the transaction device 100 but that the transaction is not completed at the POI terminal 114 meaning that the *amount to spend* held by the processor within the POI terminal 114 does not match the *amount to spend* held on the transaction device 100. Resolving such a discrepancy between the transaction device 100 and the POI terminal 114 can involve a significant overhead of time in working out what has occurred and additionally may mean that to actually purchase goods a new transaction will need to be completed and the cardholder may have less available balance to spend than they think they do. It is therefore preferable if the terminal 114 supports torn transactions.

**Figure 8** shows a transaction device and POI terminal interaction in accordance with an embodiment of the present invention which supports a torn transaction.

In Figure 8, process steps 220, 222, 224, 226, 228 and 290 are the same as for the transaction process described in relation to Figure 7. In the process of Figure 8, the POI terminal 114 detects that the transaction device 100 has been removed before it has completed its transaction and, in step 294, requests that the transaction device is either tapped again at the terminal 114 (in the event of a contactless transaction) or is reinserted into a Chip and PIN device.

In step 296 the terminal 114 then completes the transaction.

It is noted that following detection of a torn transaction the terminal 114 does not update the accumulator on the transaction device for a second time. During step 228 the accumulator on the transaction device 100 is updated with the first transaction attempt. When the transaction device 100 is removed before the transaction is completed (step 290) the first transaction attempt is declined and the user is requested in step 294 to try again. If the user then taps/inserts their transaction device again then the second transaction is treated as a continuation of the first transaction such that the value in the accumulator is not decremented a second time.

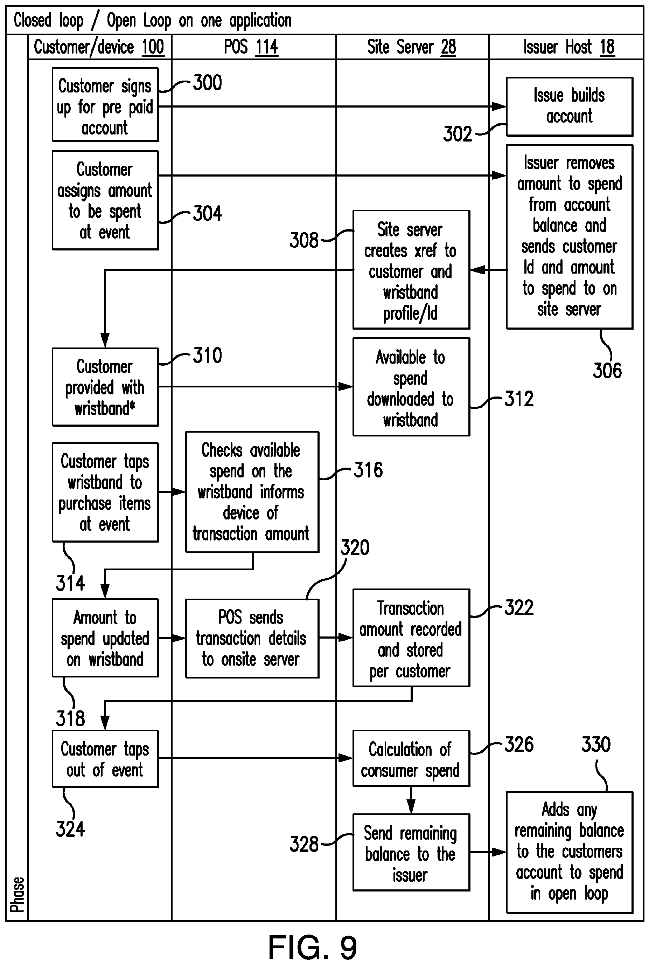

**Figure 9** shows a further embodiment of a closed loop transaction device in accordance with an embodiment of the present invention in which the transaction device is embedded in a wearable device with contactless communication capabilities.

In the embodiment of Figure 9 the transaction device 100 is embodied within a wearable device, e.g. a wristband, rather than within a traditional transaction card with a "credit card" style form factor. Figure 9 shows the various data flows between the wristband 100, a point of sale terminal 114, a site server (equivalent to server 28 in Figure 2) and the issuer host 18.

In step 300 a customer signs up for a prepaid account. For example, a customer may be due to attend an event (associated with an Event identifier, an "Event ID") such as a music festival where banking outlets will be restricted and where telecommunications networks may not be able to support traditional banking options.

In step 302 the issuer host 18 creates the customer account. In step 304, which may follow directly in response to step 302 or may alternatively be made at a later point in time, the customer assigns an amount to spend to their prepay account at a specified event.

In step 306 the issuer host then removes the assigned amount from the customer's account balance and sends a customer identifier and the assigned amount to the on-site server 28.

In step 308 the on-site server 28 creates a cross reference between the customer identifier (and associated account balance) and a wristband 100 profile.

In step 310 the customer is provided with a wristband and in step 312 the available balance to spend is downloaded to the wristband.

It is noted that the customer may be provided with the wristband at an event or may be provided with a wristband prior to attending the event. In the event that the customer collects the wristband at the event, e.g. while collecting an entry ticket, the wristband provided to the customer may initially not be personalised. In such an embodiment the customer may scan a reference on their ticket in order to personalise the wristband.

In Step 314 the customer taps their wristband to a POI terminal 114 in order to purchase an item. The POS terminal 114 then checks, in step 316, the available balance on the wristband and processes the transaction. In step 318 the available amount to spend on the wristband is updated and in step 310 the POS sends the completed transaction details to the onsite server 28.

In step 322 the transaction details received at the on-site server 28 are recorded in a customer profile.

At the end of the event the customer may, in step 324, tap out of the event, e.g. at an entry/exit POS terminal 114. The on-site server then processes the total amount spent by the customer in step 326 before sending, in step 328, the remaining balance on the wristband to the issuer. In step 330 the issuer adds any remaining balance to the customer account for use in an open-loop transaction environment. It is also noted that in step 330 reconciliation between the amount on the transaction device and the amount held on the server can be done and any discrepancies between the amounts can be flagged.

Transaction cards in accordance with embodiments of the present invention may be used in an open-loop configuration before and/or after a closed loop environment event.

Furthermore, within a closed-loop event an option may be provided to a customer to use the transaction card in an open-loop manner. For example, certain terminals within an event may be provided with access to a communications network such that they can contact and interact with an issuing bank or payment processing provider. Such terminals may be configured to offer a customer the option of using the transaction device in a closed-loop configuration (as described above in relation to Figures 5 to 9) or in an open loop configuration (i.e. in a traditional payment device manner)

As the person skilled in the art will appreciate, modifications and variations to the above embodiments may be provided, and further embodiments may be developed, without departing from the spirit and scope of the invention. Reference to standards and proprietary technologies are provided for the purpose of describing effective implementations, and do not limit the scope of the invention.

## Claims

1. A method of configuring a transaction device (102, 160) for use within a closed loop transaction system (12), the closed loop transaction system comprising a point-of-interaction terminal (24) for processing transactions with the transaction device, the method comprising:
receiving an instruction to set a field within a device data store on the transaction device to use a predetermined currency code specified by the terminal
receiving, at the transaction device, a transaction amount available for transactions with the closed loop terminal system
storing (202) the transaction amount on the transaction device
receiving an unique identifier associated with the closed loop terminal system for use in transactions with the point-of-interaction terminal within the system
storing (206) the unique identifier on the transaction device.

2. A method as claimed in Claim 1, wherein the currency code is a pseudo currency code.

3. A method as claimed in Claim 1 or Claim 2, wherein storing the unique identifier comprises updating a check table on the transaction device with the unique identifier to enable subsequent comparison with identifiers included in a data message received from a point-of-interaction terminal.

4. A method as claimed in any preceding claim, wherein the unique identifier comprises an event identifier.

5. A method as claimed in any preceding claim, comprising receiving an upper cumulative transaction amount for use within the closed loop transaction system.

6. A method as claimed in Claim 5, comprising storing the upper cumulative transaction amount in a field within the data store.

7. A method of performing a closed loop transaction on a transaction device, comprising:
configuring, in a configuration process, the transaction device according to any one of Claims 1 to 6;
initiating (220) a transaction with a point-of-interaction terminal receiving a communication from the point-of-interaction terminal
determining (222, 224) whether the received communication specifies a currency code and identifier that match the predetermined currency code and unique identifier stored on the transaction device during the configuration process
and, in the event of a match (226), proceeding with the closed loop transaction.

8. A method as claimed in Claim 7, wherein, in the event that the received communication specifies a currency code and identifier that do not match the predetermined currency code and unique identifier stored on the transaction device during the configuration process, terminating the closed loop transaction.

9. A method as claimed in Claim 7 or 8, wherein initiating the transaction with the point-of-interaction terminal comprises sending a card data object list to the terminal.

10. A method as claimed in any of Claims 7 to 9, comprising updating (228) the upper cumulative transaction amount stored within the data store.

11. A method as claimed in any of Claims 7 to 10, comprising receiving (294) a transaction declined message from the terminal, the message comprising an instruction to retry the declined transaction.

12. A method as claimed in Claim 11, comprising continuing the declined transaction and, in the event of completing the transaction, maintaining the cumulative transaction amount stored in the data store.

13. A method as claimed in any one of Claims 7 to 12, comprising initiating an open loop transaction in the event that the closed loop transaction is declined.

14. A method as claimed in any one of Claims 7 to 12, comprising initiating an open loop transaction in the event that the upper cumulative transaction amount stored in the data store is less than the transaction amount of the transaction.

15. A transaction device (102, 160) for use within a closed loop transaction system (12), the closed loop transaction system comprising a point-of-interaction terminal (24) for processing transactions with the transaction device, the device comprising:
an input (104, 162) arranged to receive: an instruction to set a field within a device data store on the transaction device to use a predetermined currency code specified by the terminal; a transaction amount available for transactions with the closed loop terminal system; and an unique identifier associated with the closed loop terminal system for use in transactions with the point-of-interaction terminal within the system;
a processor (106, 164) arranged to store the transaction amount and the unique identifier on the transaction device
wherein the processor is arranged to initiate a transaction with a point-of-interaction terminal and to determine, in response to a communication received from the point-of-interaction terminal at the input, and to determine whether the received communication specifies a currency code and identifier that match the predetermined currency code and unique identifier stored on the transaction device
wherein, in the event of a match, the processor is arranged to proceed with the closed loop transaction.
